# EUROPÄISCHE PATENTSCHRIFT

(11) **EP 2 514 644 B1**
(45) Veröffentlichungstag und Bekanntmachung des Hinweises auf die Patenterteilung: **11.06.2014**
(21) Anmeldenummer: 12159037.6
(22) Anmeldetag: 12.03.2012
(51) Int. Cl.: B60R 25/02, B62D 5/04, H02K 7/10, F16D 55/02

(54) **Verriegelungsvorrichtung, insbesondere zur Lenkradverriegelung**
Locking device, in particular for locking steering wheels
Dispositif de verrouillage, en particulier pour verrouillage du volant

(30) Priorität: 19.04.2011 DE 102011007636
(43) Veröffentlichungstag der Anmeldung: 24.10.2012
(73) Patentinhaber: Robert Bosch GmbH, 70442 Stuttgart (DE)
(72) Erfinder: Eigenmann, Joerg, 77855 Achern (DE); Barth, Matthias, 73087 Bad Boll (DE)

(56) Entgegenhaltungen:
- EP-A2- 0 793 034
- WO-A1-2007/036314
- DE-A1-102005 006 699
- DE-A1-102007 006 163
- DE-A1-102007 058 552
- FR-A1- 2 831 502
- FR-A1- 2 909 954
- US-A1- 2006 219 499

## Beschreibung

### Stand der Technik

Die vorliegende Erfindung betrifft eine Blockiervorrichtung zum Blockieren der Lenkung eines Kraftfahrzeugs, mit einem Lenkunterstützungsantrieb, der Dauermagnete umfasst, und der zur Bildung eines Magnetkreises vorgesehen ist, wobei der Magnetkreis zum Antrieb einer Welle vorgesehen ist, wobei die Blockiervorrichtung weiterhin ein Blockiermittel aufweist, das reversibel von einem Freigabezustand, in dem die Welle drehbar ist, in einen Blockierzustand, in dem die Welle unter Normallast blockiert ist, verstellbar ist.

Um einen Diebstahlschutz in Kraftfahrzeugen zu erreichen, ist es bekannt, Lenkunterstützungsantriebe mechanisch zu blockieren. Dafür wird die Lenkung, insbesondere die Lenkwelle oder eine Querstange der Lenkung, herkömmlich mit einer Blockiervorrichtung versehen, die einen Sperrbolzen aufweist. Der Sperrbolzen greift in einem Blockierzustand der Lenkung in eine Ausnehmung ein und blockiert die Lenkwelle oder die Querstange formschlüssig. Eine solche Blockiervorrichtung wird mit einem Elektromotor oder einem Linearaktuator betrieben, mit dem der Sperrbolzen vom Blockierzustand in den Freigabezustand oder zurück verstellt wird.

Mit der FR 2909954 A1 ist eine Vorrichtung zur mechanischen Blockierung einer Lenksäule bekannt geworden, bei der ein Blockierbolzen zur Verriegelung elektromagnetisch verstellt wird. Dabei wird der Elektromagnet durch die Elektronikeinheit angesteuert, die ebenfalls den elektrischen Servermotor der Lenksäule ansteuert.

Die DE 10 2005 006 699 A1 zeigt eine elektromagnetische Bremse mit einem Permanentmagneten, bei dem eine Ankerscheibe mittels eines Elektromagneten gegen einen korrespondierenden Bremsenkörper gepresst wird.

### Offenbarung der Erfindung

Aufgabe der vorliegenden Erfindung ist es, eine Blockiervorrichtung für die Lenkung eines Kraftfahrzeugs zu schaffen, die im Vergleich zu einer herkömmlichen Blockiervorrichtung weniger aufwendig und daher kostengünstiger fertigbar ist, die nur geringe Positionierungsanforderungen aufweist, und die die allgemeinen Anforderungen in Bezug auf den Stromverbrauch und die Betriebssicherheit erfüllt.

Die Aufgabe wird gelöst mit einer Blockiervorrichtung zum Blockieren einer Lenkung eines Kraftfahrzeugs, mit einem Lenkunterstützungsantrieb, der einen Elektromagneten und einen Dauermagneten umfasst, die zur Ausbildung eines Magnetkreises vorgesehen sind, wobei der Elektromagnet bestrombar ist und im bestromten Zustand des Elektromagneten zum Antrieb einer Welle, insbesondere einer Lenkwelle oder einer Querstange der Lenkung, vorgesehen ist, wobei die Blockiervorrichtung weiterhin ein Blockiermittel aufweist, das reversibel von einem Freigabezustand, in dem die Welle drehbar ist, in einen Blockierzustand, in dem es die Welle unter Normallast blockiert, verstellbar ist, wobei der Magnetkreis des Lenkunterstützungsantriebs das Blockiermittel zumindest in einem der Zustände
- Freigabezustand oder
- Blockierzustand hält,
   und/oder zumindest entweder das Verstellen des Blockiermittels
- vom Freigabezustand in den Blockierzustand oder
- vom Blockierzustand in den Freigabezustand bewirkt.

Bei der erfindungsgemäßen Blockiervorrichtung übernimmt der Lenkunterstützungsantrieb erfindungsgemäß zumindest einen Teil der Positionieraufgaben der Blockiervorrichtung, nämlich zumindest entweder das Halten des Blockiermittels im Freigabezustand oder das Halten des Blockiermittels im Blockierzustand oder beides, und/oder es übernimmt zumindest einen Teil der Verstellaufgaben der Blockiervorrichtung, nämlich entweder das Verstellen des Blockiermittels vom Freigabezustand in den Blockierzustand oder zurück oder beide. Die vom Lenkunterstützungsantrieb übernommenen Positionier- und/oder Verstellaufgaben müssen daher nicht von zusätzlichen Halte- und/oder Verstellmitteln durchgeführt werden. Dadurch ist die erfindungsgemäße Blockiervorrichtung im Vergleich zu herkömmlichen Blockiervorrichtungen kostengünstiger herstellbar.

Der Lenkunterstützungsantrieb ist bevorzugt als ein elektrisch kommutierender Wechselstrommotor oder ein Gleichstrommotor ausgebildet, so dass er zumindest einen bestrombaren Elektromagneten und zumindest einen Dauermagneten aufweist. Dabei ist der Elektromagnet durch zumindest eine Spulenwicklung gebildet.

Eine Normallast ist ein auf die Welle wirkendes Drehmoment, bei dem es für einen Benutzer des Kraftfahrzeugs im Blockierzustand der Blockiervorrichtung unmöglich ist, die Lenkung zu betätigen. Eine Überlast ist ein auf die Welle wirkendes Drehmoment, welches ein Benutzer im Blockierzustand der Blockiervorrichtung bewirkt, wenn er das Lenkrad ein- oder mehrmalig ruckartig betätigt, insbesondere mit mechanischen Hilfsmitteln.

In einer bevorzugten Ausführungsform umfasst die Blockiervorrichtung einen Zusatzaktuator, der aus einem Dauermagneten gebildet ist. Weiterhin bevorzugt umfasst er zusätzlich oder alternativ einen Elektromagneten. In einer besonders bevorzugten Ausführungsform umfasst das Blockiermittel den Zusatzaktuator, ganz besonders bevorzugt zumindest den Dauermagneten.

Der Zusatzaktuator bildet einen Magnetkreis, der für die Positionier- und/oder Verstellaufgaben vorgesehen ist, die nicht durch den Lenkunterstützungsantrieb erfolgen. Es ist daher bevorzugt, dass auch der Magnetkreis des Zusatzaktuators zum Halten des Blockiermittels im Freigabezustand und/oder im Blockierzustand und/oder zum Verstellen des Blockiermittels vom Freigabezustand in den Blockierzustand und/oder zurück vorgesehen ist. Jedoch ergänzen sich die vom Lenkunterstützungsantrieb ausgeführten Positionier- und Verstellaufgaben und die vom Zusatzaktuator ausgeführten Positionier- und Verstellaufgaben miteinander, wobei der Lenkunterstützungsantrieb zumindest eine der Positionier- und Verstellaufgaben übernimmt.

Der Magnetkreis des Lenkunterstützungsantriebs und der Magnetkreis des Zusatzaktuators sind im unbestromten Zustand des Elektromagneten jeweils bevorzugt durch das Magnetfeld des Dauermagneten und im bestromten Zustand des Elektromagneten jeweils ebenfalls bevorzugt durch das Magnetfeld des Dauermagneten sowie das elektromagnetische Feld des Elektromagneten gebildet. Dabei überlagern sich die Magnetfelder des Dauermagneten sowie des Elektromagneten.

Der vom Elektromagneten des Lenkunterstützungsantriebs verursachte rotierende elektromagnetische Feldanteil des Magnetkreises nimmt den Rotor des Lenkunterstützungsantriebs im Betrieb des Lenkunterstützungsantriebs mit, so dass sich die Welle dreht.

Es ist bevorzugt, dass jeweils der Magnetkreisanteil des Magnetkreises entweder des Lenkunterstützungsantriebs und/oder des Zusatzaktuators, der durch den Dauermagneten gebildet ist, das Blockiermittel so anzieht oder abstößt, dass es das Blockiermittel im Freigabezustand oder im Blockierzustand hält. Bevorzugt sind dabei jeweils der Dauermagnet und der Elektromagnet so dimensioniert, dass der im bestromten Zustand vom Elektromagneten verursachte Magnetkreisanteil des Magnetkreises klein gegenüber dem vom Dauermagneten verursachten Magnetkreisanteil ist. Dadurch hält der vom Dauermagneten verursachte Magnetkreisanteil das Blockiermittel auch im bestromten Zustand des Elektromagneten sicher im Freigabezustand oder im Blockierzustand.

Es ist weiterhin bevorzugt, dass der Elektromagnet entweder des Lenkunterstützungsantriebs und/oder des Zusatzaktuators zum Verstellen des Blockiermittels vom Freigabezustand in den Blockierzustand und/oder zurück so bestromt wird, dass der resultierende Magnetkreis das Blockiermittel anzieht oder abstößt, so dass er das Blockiermittel verstellt. Vorzugsweise wird der Elektromagnet beim Verstellen des Blockiermittels vom Freigabezustand in den Blockierzustand oder zurück so bestromt, dass sich die Welle dabei nicht dreht. Dafür ist es bevorzugt, dass der Elektromagnet mit einem Ansteuermuster bestromt wird, insbesondere mit einem Peak, einem Gleichstrom oder einem pulsweitenmodulierten Signal.

Da zum Halten des Blockiermittels der durch einen der Dauermagnete verursachte Magnetkreisanteil eines der Magnetkreise genutzt wird, und nur zum reversiblen Verstellen des Blockiermittels ein Bestromen eines der Elektromagneten erforderlich ist, wird die Batterie des Kraftfahrzeugs beim Stillstand nicht dauerhaft belastet.

Das Blockiermittel ist im Freigabezustand und/oder im Blockierzustand bevorzugt im Magnetkreis und/oder im Zusatzmagnetkreis angeordnet. Besonders bevorzugt weist der Elektromagnet des Lenkunterstützungsantriebs Wickelköpfe auf, wobei das Blockiermittel zumindest entweder im Freigabezustand oder im Blockierzustand oder in beiden Zuständen im Bereich der Wickelköpfe angeordnet ist. Besonders bevorzugt sind der Magnetkreis des Lenkunterstützungsantriebs und des Zusatzaktuators beim Halten und/oder Verstellen des Blockiermittels so positioniert und dimensioniert, dass sie sich entweder nicht behindern oder gegenseitig unterstützen.

In einer bevorzugten Ausführungsform erfolgt das Verstellen des Blockiermittels vom Freigabezustand in den Blockierzustand und das Halten des Blockiermittels im Freigabezustand durch den Lenkunterstützungsantrieb, wobei das Verstellen des Blockiermittels vom Blockierzustand in den Freigabezustand und das Halten des Blockiermittels im Blockierzustand durch den Zusatzaktuator erfolgt, oder umgekehrt. In dieser Ausführungsform umfasst der Zusatzaktuator bevorzugt sowohl den Dauermagneten als auch den Elektromagneten.

In einer weiteren bevorzugten Ausführungsform erfolgt das Verstellen des Blockiermittels vom Freigabezustand in den Blockierzustand und zurück durch den Lenkunterstützungsantrieb. In dieser Ausführungsform ist es bevorzugt, dass der Lenkunterstürzungsantrieb außerdem entweder den Freigabezustand oder den Blockierzustand bewirkt. In dieser Ausführungsform umfasst der Zusatzaktuator nur den Dauermagneten. Ganz besonders bevorzugt ist der Zusatzaktuator dabei im Blockiermittel angeordnet.

In dieser Ausführungsform übernimmt der Lenkunterstützungsantrieb zumindest eine Positionier- und alle Verstellaufgaben des Blockiermittels. Da die Blockiervorrichtung dieser Ausführungsform lediglich den ohnehin für die Lenkunterstützung benötigen Lenkunterstützungsantrieb sowie ein zumindest teilweise als Dauermagnet ausgebildetes Blockiermittel umfasst, ist diese Blockiervorrichtung besonders kostengünstig herstellbar.

Das Blockiermittel ist bevorzugt zumindest teilweise magnetisch und/oder zumindest teilweise magnetisiert und/oder zumindest teilweise magnetisierbar ausgebildet.

Ein zumindest teilweise magnetisches Blockiermittel im Sinne der Erfindung umfasst sowohl ein Material, welches ein äußeres Magnetfeld leitet, so dass das Magnetfeld durch dieses Material verstärkt wird, als auch ein Material, welches die Magnetfeldlinien zumindest nicht schwächt, oder verdrängt und das Magnetfeld daher schwächt oder sogar gar nicht leitet. Das Blockiermittel ist bevorzugt zumindest teilweise paramagnetisch und/oder ferromagnetisch und/oder ferrimagnetisch und/oder antiferromagnetisch ausgebildet.

Ein zumindest teilweise magnetisiertes Blockiermittel im Sinne der Erfindung umfasst ein dauerhaft magnetisiertes Material, also einen Dauermagneten. In dieser Ausführungsform bildet der Dauermagnet bevorzugt den Zusatzaktuator.

Ein magnetisierbares Blockiermittel im Sinne der Erfindung umfasst ein Material, welches zumindest in einem Ausgangszustand unmagnetisiert ist und durch ein äußeres Magnetfeld, insbesondere dauerhaft, magnetisierbar ist.

In einer bevorzugten Ausführungsform ist das Blockiermittel zumindest teilweise aus einem weichmagnetischen Material gebildet, insbesondere aus einem weichmagnetischen Metall oder einer Metall- Legierung oder einem weichmagnetischen keramischen Werkstoff. Als Metall oder Metall- Legierung sind Eisen, Nickel- Eisen- oder Cobalt- Eisen- Legierungen bevorzugt, als keramischer Werkstoff ein Ferrit.

Weiterhin ist es bevorzugt, dass das Blockiermittel zumindest teilweise aus einem Kunststoff gebildet ist, damit es möglichst leicht ist. Dadurch ist das Gesamtgewicht der Blockiervorrichtung möglichst klein und das Blockiermittel mit nur geringem Kraftaufwand verstellbar.

Das Blockiermittel wird bevorzugt in Abhängigkeit von seiner Ausbildung, insbesondere von dem oder den für das Blockiermittel verwendeten Materialien, ihrer Anordnung im Blockiermittel, der Form und/oder des Gewichtes des Blockiermittels, seiner Anordnung relativ zu dem Magnetkreis des Lenkunterstützungsantriebs und/oder des Zusatzaktuators, sowie in Abhängigkeit von der Stärke der beiden Magnetkreise sowie ihrer Ausrichtung zueinander angezogen oder abgestoßen.

Es ist ebenfalls bevorzugt, dass das Blockiermittel gegen die Kraft eines Kraftmittels, insbesondere vom Freigabezustand in den Blockierzustand, verstellt wird. Dabei ist es besonders bevorzugt, dass das Blockiermittel das Kraftmittel umfasst.

Das Blockiermittel ist vorzugsweise drehfest an der Welle angeordnet, so dass es sich im Freigabezustand mit der Welle dreht. Zum Verstellen vom Blockierzustand in den Freigabezustand und/oder zurück ist es bevorzugt parallel oder quer zur Welle verstellbar. Besonders bevorzugt ist es axial entlang der Welle verschieblich, und/oder in axialer Richtung der Welle kippbar vorgesehen. Prinzipiell ist auch eine Ausführungsform des Blockiermittels möglich, die zusätzlich oder alternativ drehbar ist. Ganz besonders bevorzugt sind das Blockiermittel und/oder der Zusatzaktuator konzentrisch um die Welle angeordnet.

Im Blockierzustand wirkt das Blockiermittel bevorzugt reibschlüssig oder reib- und formschlüssig mit einem Bauteil der Blockiervorrichtung, insbesondere mit dem Zusatzmagneten und/oder einem Gehäusebauteil, zusammen. In dieser Ausführungsform ist das Blockiermittel beispielsweise durch zumindest ein Reibmittel gebildet, insbesondere durch eine Reibscheibe, und liegt im Blockierzustand zumindest teilsweise an dem Bauteil an. Dabei erfolgt der Reibschluss des Blockiermittels mit dem Bauteil bevorzugt in radialer Richtung der Welle und/oder in axialer Richtung der Welle. Je nach Einbausituation ist aber auch ein Reib- und/oder Formschluss in einem Winkel zur Welle möglich. In einer bevorzugten Ausführungsform ist das Blockiermittel kreisförmig ausgebildet. Da das Blockiermittel und das Bauteil im Blockierzustand reibschlüssig oder reib- und formschlüssig zusammenwirken, ist die Welle bei Normallast im Blockierzustand blockiert, so dass, beispielsweise bei Verwendung der Blockiervorrichtung als Lenkradverriegelungsvorrichtung für ein Kraftfahrzeug, der Diebstahlschutz in dem Kraftfahrzeug sichergestellt ist.

Da andererseits das Blockiermittel nur im Blockierzustand mit dem Bauteil zusammenwirkt, verrastet die Blockiervorrichtung im Freigabezustand nicht. Sondern im Freigabezustand dreht es sich weiterhin bevorzugt relativ zum Bauteil, so dass sich die Welle ungehindert dreht. Während des Betriebes des Kraftfahrzeugs ist die Betriebssicherheit daher trotz Verwendung des Lenkunterstützungsantriebs als Komponente der Blockiervorrichtung sichergestellt.

Es ist bevorzugt, dass sich das Blockiermittel im Blockierzustand bei Überlast relativ zum Bauteil dreht. Bevorzugt reibt es bei Auftreten einer Überlast am Bauteil entlang. Daher ermöglicht die Blockiervorrichtung im Blockierzustand einerseits das Blockieren der Welle, nämlich bei Normallast, und andererseits das Drehen der Welle bei Überlast.

Der Stärke des Form- und/oder Reibschlusses ist bevorzugt durch die Kontur des Blockiermittels sowie des Bauteils, insbesondere durch die Kontur ihrer aneinander liegenden Flächen, bestimmt. Beispielsweise ist die Reibung durch Ausbildung einer oder beider Flächen mit einer Wellenkontur im Vergleich zu glatten Flächen vergrößerbar, so dass der Betrag der notwendigen Überlast, bei der das Blockiermittel die Welle nicht mehr blockiert, bei Ausbildung der Flächen mit Wellenkontur größer ist.

Da das Blockiermittel und das Bauteil dieser Ausführungsform im Blockierzustand bei Auftreten einer Überlast aneinander entlang reiben und nach Auftreten der Überlast wieder form- und/oder reibschlüssig aneinander anliegen, verbleibt die Blockiervorrichtung im Blockierzustand. Dabei wird die Lenkung durch die Überlast nicht beschädigt. Das Blockiermittel bewirkt daher gleichzeitig einen Überlastschutz für die Lenkung, ohne dass zusätzliche Bauteile zur Realisierung des Überlastschutzes benötigt werden. Dadurch sind die Kosten für die erfindungsgemäße Blockiervorrichtung weiter reduziert.

Im Folgenden wird die Erfindung anhand von **Figuren** beschrieben. Die **Figuren** sind lediglich beispielhaft und schränken den allgemeinen Erfindungsgedanken nicht ein.
- **Fig. 1**: zeigt schematisch die Lenkung eines Kraftfahrzeugs,
- **Fig. 2**: zeigt eine Ausführungsform einer erfindungsgemäßen Blockiervorrichtung,
- **Fig. 3**: zeigt eine weitere Ausführungsform einer erfindungsgemäßen Blockiervorrichtung,
- **Fig. 4**: zeigt in **Fig. 4(a)** schematisch eine weitere Ausführungsform einer erfindungsgemäßen Blockiervorrichtung 100 in der Freigabeposition F und in **Fig. 4 (b)** das an der Welle 4 angeordnete Blockiermittel 6.

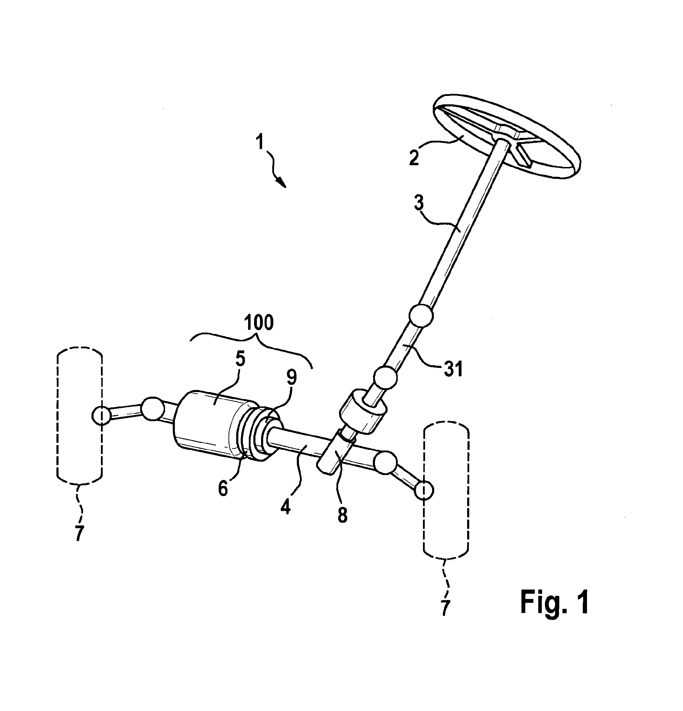

**Fig. 1** zeigt schematisch die Lenkung 1 eines Kraftfahrzeugs. Die Lenkung 1 umfasst eine Lenksäule 3, an der ein Lenkrad 2 zur Handhabung durch einen Fahrer des Kraftfahrzeugs (nicht dargestellt) angeordnet ist. Zur Lenkkraftunterstützung umfasst die Lenkung 1 einen Lenkunterstützungsantrieb 5, der beispielsweise mittels eines Riementriebs (nicht dargestellt) mit einer Welle, hier mit einer Querstange 4 der Lenkung 1, zusammenwirkt. Im Folgenden werden die Begriffe Welle und Querstange 4 synonym verwendet. Die Welle 4 ist mittels eines Getriebes 8, insbesondere mittels eines Kugeltriebs, mit einer Kreuzgelenkwelle 31 verbunden, an der die Lenksäule 3 angeordnet ist. Zur Verdeutlichung sind hier schematisch die an der Querstange 4 angeordneten Kraftfahrzeugräder 7 dargestellt.

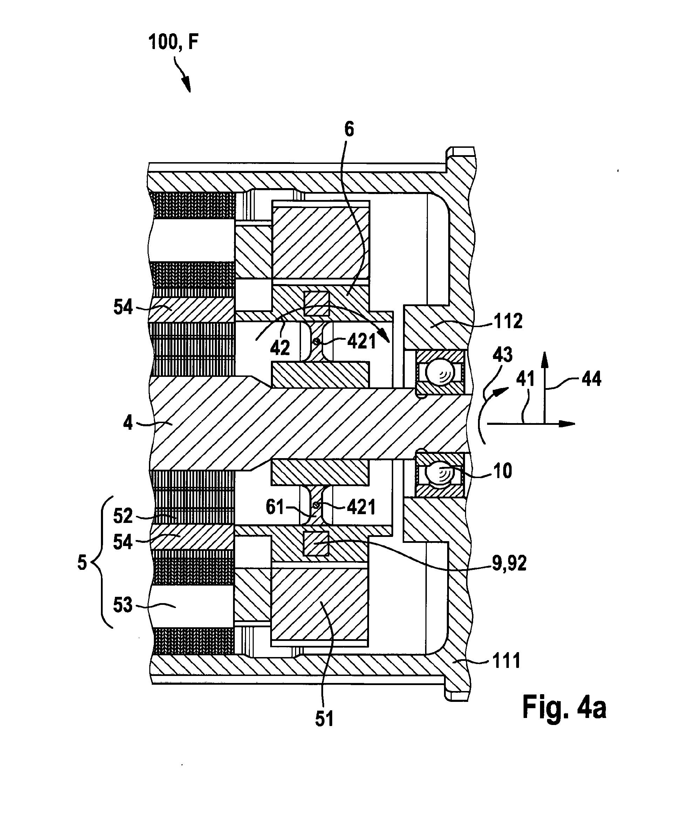

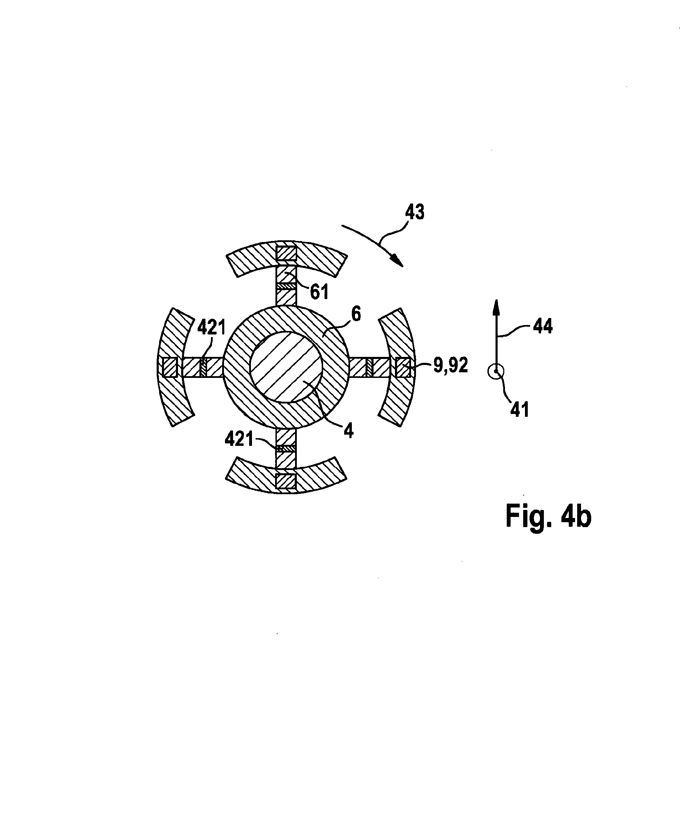

Der Lenkunterstützungsantrieb 5 ist Bestandteil einer erfindungsgemäßen Blockiervorrichtung 100, die zum Blockieren der Lenkung, insbesondere als Diebstahlschutz, vorgesehen ist. Die Blockiervorrichtung 100 umfasst hier neben einem Blockiermittel 6 einen Zusatzaktuator 9 mit einem Zusatzdauermagneten 92 und einem Zusatzelektromagneten 91. Prinzipiell ist der Aktuator 9 in Abhängigkeit von der Ausführungsform des Lenkunterstützungsantriebs 5 sowie des Blockiermittels 6 aber nicht zwingend erforderlich (s. **Fig. 4**).

Auch sind Ausführungsformen einer Lenkung 1 bekannt, bei der der Lenkunterstützungsantrieb 5 an der Lenksäule 3 angeordnet ist. Die erfindungsgemäße Blockiervorrichtung 100 ist auch für solche Lenkungen 1, und prinzipiell für Lenkungen 1 mit frei gewähltem Einbauort des Lenkunterstützungsantriebs 5 verwendbar.

Das Blockiermittel 6 der Blockiervorrichtung 100 ist magnetisch leitend vorgesehen. Dabei umfasst der Begriff der magnetischen Leitfähigkeit im Sinne dieser Erfindung sowohl Materialien, die Magnetfeldlinien beziehungsweise ein Magnetfeld leiten, als auch solche, die magnetisch isolierend sind, also Magnetfeldlinien verdrängen. Je nach Leitfähigkeit des Blockiermittels 6 sowie der Stärke der Magnetkreise des Lenkunterstützungsantriebs 5 und des Zusatzaktuators 9 wird das Blockiermittel 6 von den Magnetkreisen jeweils angezogen oder abgestoßen.

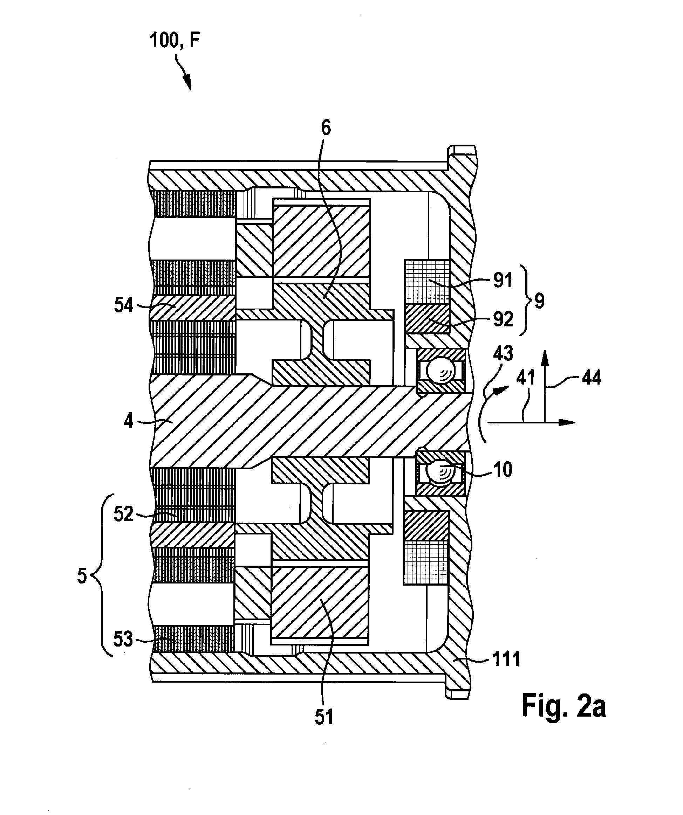

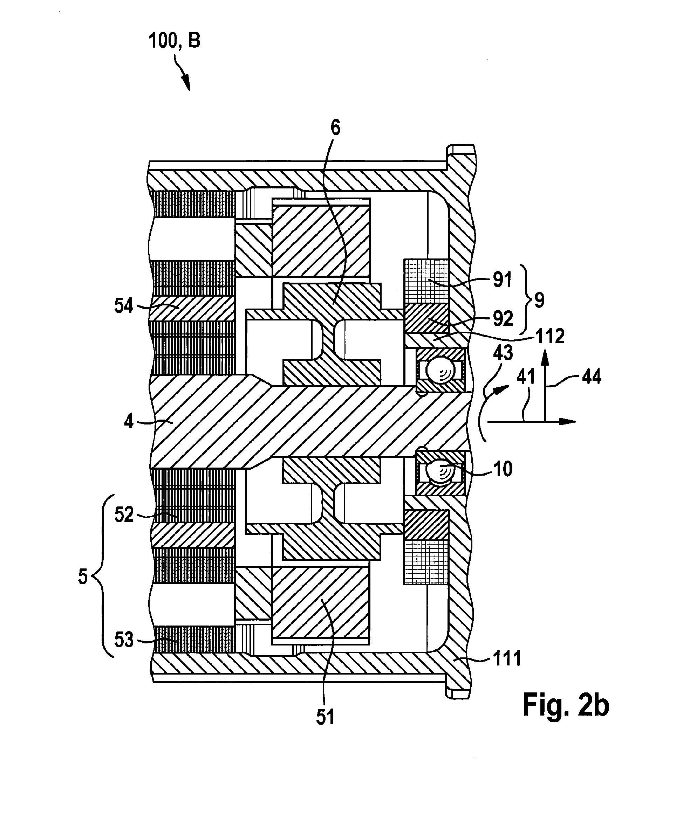

**Fig. 2** zeigt eine Ausführungsform der erfindungsgemäßen Blockiervorrichtung 100 der **Fig. 1****.** Die Blockiervorrichtung 100 umfasst den Lenkunterstützungsantrieb 5, der zum Drehen der Welle 4 in und gegen eine Drehrichtung 43 vorgesehen ist. Die Welle 4 ist in einem Gehäuse 111 der Blockiervorrichtung 100 mittels eines Lagers 10 drehbar gelagert.

Der hier gezeigte Lenkunterstützungsantrieb 5 weist einen Stator 53 sowie einen Rotor 52 mit Dauermagneten 54 auf. Die Dauermagnete 54 sind abwechselnd entgegengesetzt polarisiert, so dass sich in einer Umfangsrichtung 43 des Rotors 52 immer ein magnetischer Nordpol mit einem magnetischen Südpol abwechselt. Am Stator 53 sind außerdem Spulenwicklungen angeordnet, die Elektromagnete bilden. Im Folgenden werden die Begriffe Spulenwicklung und Elektromagnet synonym verwendet. Von den Elektromagneten sind hier Wickelköpfe 51 sichtbar. Die Elektromagnete und ihre Wickelköpfe 51 sind in Umfangsrichtung 43 der Welle 4 um diese angeordnet.

Der hier gezeigte Lenkunterstützungsmotor ist als ein elektrisch kommutierender Wechselstrommotor (EC-Motor) ausgebildet. Prinzipiell ist für die Erfindung auch ein Gleichstrommotor verwendbar.

Im Betrieb wird ein Regelstrom in den Elektromagneten des Stators 53 so gesteuert, dass sich ein rotierendes Magnetfeld ergibt, welches den Rotor 53 mitnimmt, so dass die Welle 4 in diesem bestromten Zustand der Elektromagneten gedreht wird. Im bestromten Zustand des Lenkunterstützungsantriebs 5 bildet die Überlagerung des rotierenden Magnetfeldes des Elektromagneten mit dem Magnetfeld der Dauermagnete 54 einen Magnetkreis. Im unbestromten Zustand wird der Magnetkreis nur durch das Magnetfeld der Dauermagnete 54 gebildet.

Die **Fig. 2(a)** zeigt den Freigabezustand F der Blockiervorrichtung 100, in dem das Blockiermittel 6 sowohl im bestromten als auch im unbestromten Zustand des Elektromotors im Bereich der Wickelköpfe 51 vorgesehen ist, so dass es im Magnetkreis des Lenkunterstützungsantriebs 5 angeordnet ist. Es wird durch den vom Dauermagneten 54 gebildeten Magnetkreisanteil des Magnetkreises des Lenkunterstützungsantriebs 5 im Freigabezustand F gehalten.

Das Blockiermittel 6 ist drehfest an der Welle 4 angeordnet, so dass es sich im Freigabezustand F bei Drehen der Welle 4 mit dieser dreht. Weiterhin ist es in der hier gezeigten Ausführungsform in axialer Richtung 41 der Welle 4 verschieblich vorgesehen. Dafür ist an der Welle 4 beispielsweise eine Nut (nicht gezeigt) und an dem Blockiermittel 6 eine Passfeder (nicht gezeigt) oder umgekehrt vorgesehen, so dass das Blockiermittel 6 mit seiner Passfeder entlang der Nut der Welle 4 oder mit seiner Nut entlang der Passfeder der Welle 4 in axiale Richtung 41 hin und wieder zurück gleiten kann.

Die hier gezeigte Ausführungsform der Blockiervorrichtung 100 umfasst den Zusatzaktuator 9 mit dem Zusatzmagneten 92 und dem Zusatzelektromagneten 91. Der Zusatzaktuator 9 bildet sowohl im bestromten als auch im unbestromten Zustand des Zusatzelektromagneten 91 einen Magnetkreis.

**Fig. 2(b)** zeigt die Blockiervorrichtung 100 in der Blockierposition B, in der das Blockiermittel 6 relativ zur Freigabeposition F in axialer Richtung 41 der Welle 4 verschoben ist. Es wird durch den vom Dauermagneten 92 gebildeten Magnetkreisanteil des Magnetkreises des Zusatzaktuators 9 im Blockierzustand B gehalten.

In der Blockierposition B liegt das Blockiermittel 6 zumindest teilweise am Dauermagneten 92 des Zusatzaktuators 9 an und wirkt form- und reibschlüssig mit diesen zusammen. Durch den Form- und Reibschluss blockiert es die Welle 4 so, dass sie bei Normallast blockiert und somit nicht drehbar ist. Wenn das Lenkrad 2 der Lenkung 1 aber durch einen Bediener ruckartig von Hand oder mit einem Hilfsmittel gedreht wird, so dass eine Überlast auf die Welle 4 wirkt, ermöglicht die erfindungsgemäße Blockiervorrichtung 100 ein schwergängiges Drehen der Welle 4, verbleibt aber im Blockierzustand B. Die erfindungsgemäße Blockiervorrichtung 100 wirkt daher gleichzeitig als Überlastschutz, ohne zusätzliche Bauteile zu benötigen.

Zum Verschieben des Blockiermittels 6 vom Freigabezustand F in den Blockierzustand B wird der Elektromagnet 91 des Zusatzaktuators 9 so bestromt, dass das Blockiermittel 6 durch den Magnetkreis des Zusatzaktuators 9 stärker angezogen wird, als durch den Magnetkreis des Lenkunterstützungsantriebs 5. Dadurch verschiebt sich das Blockiermittel 6 in axialer Richtung 41 entlang der Welle 4, bis es am Dauermagneten 92 des Zusatzaktuators 9 anliegt.

Dann überwiegt die Anziehungskraft des Magnetkreises des Zusatzaktuators 9 auch im unbestromten Zustand des Zusatzaktuators 9 gegenüber der des Magnetkreises des Lenkunterstützungsantriebs 5, so dass das Blockiermittel 6 sicher im Blockierzustand B gehalten wird.

Zum Verschieben des Blockiermittels 6 vom Blockierzustand B in den Freigabezustand F wird der Elektromagnet des Lenkunterstützungsantriebs 5 so bestromt, dass das Blockiermittel 6 durch den Magnetkreis des Lenkunterstützungsantriebs 5 stärker angezogen wird, als durch den Magnetkreis des Zusatzaktuators 9. Dadurch verschiebt sich das Blockiermittel 6 gegen die axiale Richtung 41 entlang der Welle 4, bis es im Bereich der Wickelköpfe 51 angeordnet ist.

Dann überwiegt die Anziehungskraft des Magnetkreises des Lenkunterstützungsantriebs 5 sowohl im bestromten als auch im unbestromten Zustand des Lenkunterstützungsantriebs 5 gegenüber der des Magnetkreises des Zusatzaktuators 9, so dass das Blockiermittel 6 sicher im Freigabezustand F gehalten wird.

Es ist bevorzugt, dass die Blockiervorrichtung 100 zudem ein Kraftmittel 61 (s. beispielsweise Ausführungsform der **Fig. 4**) aufweist, insbesondere eine Schraub- oder Blattfeder, so dass das Blockiermittel 6 gegen die Kraft des Kraftmittels 61, insbesondere von einer Freigabeposition F, in der die Welle 4 sich frei drehen kann, in eine Blockierposition B, in der die Welle 4 bei Normallast blockiert ist, verstellt wird.

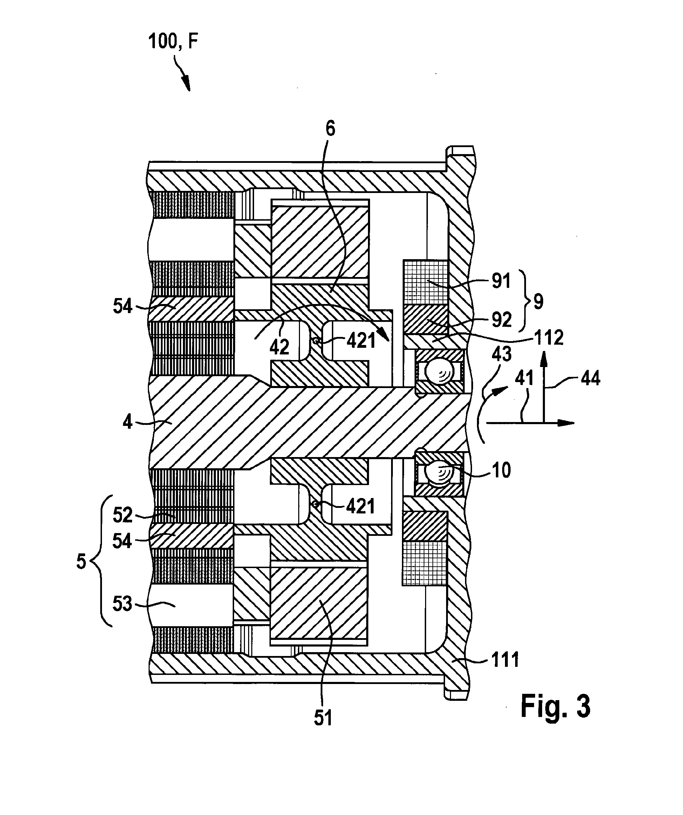

**Fig. 3** zeigt eine weitere Ausführungsform einer erfindungsgemäßen Blockiervorrichtung 100 in der Freigabeposition F. Im Gegensatz zur Ausführungsform der **Fig. 2** ist das Blockiermittel 6 der **Fig. 3** nicht in axialer Richtung 41 der Welle 4 verschieblich vorgesehen, sondern reversibel um einen oder mehrere Kipppunkte oder Kipplinien 421 in eine Kipprichtung 42 kippbar vorgesehen. Die Kipprichtung 42 weist eine in radialer Richtung 44 der Welle 4 sowie eine in axialer Richtung 41 der Welle 4 verlaufende Komponente auf. In der Blockierposition B ist das Blockiermittel 6 gegenüber der Freigabeposition F um die Kipplinie 421 in Kipprichtung 42 verkippt, so dass es am Zusatzmagneten 92 und/oder einem Gehäusebauteil 112 zumindest teilweise anliegt und, analog zur Ausführungsform der **Fig. 2****,** form- und reibschlüssig mit diesen zusammenwirkt.

Die Blockiervorrichtung 100 der Ausführungsform der **Fig. 3** hat gegenüber der der **Fig. 2** den Vorteil, dass weder an der Welle 4 noch an dem Blockiermittel 6 eine Nut vorgesehen ist, die verschmutzen kann.

**Fig. 4** zeigt in **Fig. 4(a)** schematisch eine weitere Ausführungsform einer erfindungsgemäßen Blockiervorrichtung 100 in der Freigabeposition F. In **Fig. 4 (b)** ist das an der Welle 4 angeordnete Blockiermittel 6 gezeigt.

Das Blockiermittel 6 ist analog der Ausführungsform der **Fig. 3** um die Kipplinie 421 kippbar ausgebildet. In dieser Ausführungsform der Blockiervorrichtung 100 ist als Zusatzaktuator 9 aber lediglich ein Dauermagnet 92 im Blockiermittel 6 vorgesehen.

Im Freigabezustand F wird das Blockiermittel 6 analog zu den Ausführungsformen der **Fig. 2** und **3** durch den Magnetkreisanteil des Magnetkreises des Lenkunterstützungsantriebs 5 gehalten, der durch seine Dauermagnete 54 gebildet ist, wobei das Blockiermittel 6 zumindest teilweise magnetisch leitfähig ausgebildet ist, so dass es im Freigabezustand F vom Magnetkreis des Lenkunterstützungsantriebs 5 angezogen wird.

Im Gegensatz zu den Ausführungsformen der **Fig. 2** und **3** wird der Lenkunterstützungsantrieb 5 der Ausführungsform der **Fig. 4** aber sowohl für das Verstellen der Blockiervorrichtung 100 vom Freigabezustand F in den Blockierzustand B als auch zurück genutzt. Dafür wird der Elektromagnet des Lenkunterstützungsantriebs 5 in entgegen gesetzte Richtungen bestromt, wobei der resultierende Magnetkreis des Lenkunterstützungsantriebs 5 das Blockiermittel 6 bei Bestromen in die eine Richtung anzieht, während er das Blockiermittel 6 bei Bestromen in die entgegen gesetzte Richtung abstößt. Dabei erfolgt das Verstellen vom Blockierzustand B in den Freigabezustand F, indem die magnetisch leitfähigen Teile der Blockiermittels 6 vom bestromten Magnetkreis des Lenkunterstützungsantriebs 5 angezogen werden. Das Verstellen vom Freigabezustand F in den Blockierzustand B erfolgt, indem der im Blockiermittel 6 angeordnete Dauermagnet 92 vom bestromten Magnetkreis des Lenkunterstützungsantriebs 5 angezogen wird.

Im Blockierzustand B überwiegt der Magnetkreis, der vom hier im Blockiermittel 6 angeordneten Dauermagneten 92 des Zusatzaktuators 9 gebildet ist. In diesem Zustand liegt das Blockiermittel 6 zumindest teilweise am Gehäusebauteil 112 des Lenkunterstützungsantriebs 5 an.

Dabei ist es in einer Ausführungsform bevorzugt, dass der durch das Magnetfeld des Dauermagneten 92 gebildete Magnetkreis des Zusatzaktuators 9 so angeordnet ist, dass er beim Verstellen des Blockiermittels 6 vom Freigabezustand F in den Blockierzustand B umso abstoßender gegenüber dem Magnetkreis des Lenkunterstützungsantriebs 5 wirkt, je weiter das Blockiermittel 6 gekippt ist.

Das Blockiermittel 6 ist hier zusätzlich gegen die Kraft eines Kraftmittels 61 vom Freigabezustand F in den Blockierzustand B kippbar vorgesehen, so dass das Kraftmittel 61 das Blockiermittel 6 im Freigabezustand F hält. Das Kraftmittel 61 ist hier als Blattfeder ausgebildet. Bei dem hier dargestellten axial kippenden Blockiermittel ist die Kraft des Kraftmittels in Abhängigkeit von den in axialer Richtung wirkenden Abstoßungs- und Anziehungskräften der Magnetkreise dimensioniert, wobei das Kraftmittel in radialer Richtung so steif ausgelegt sein muss, dass das Blockiermittel das Drehmoment übertragen kann.

## Patentansprüche

1. Blockiervorrichtung (100) zum Blockieren der Lenkung (1) eines Kraftfahrzeugs, mit einem Lenkunterstützungsantrieb (5), der einen Elektromagneten (51) und einen Dauermagneten (54) umfasst, die zur Ausbildung eines Magnetkreises vorgesehen sind, wobei der Elektromagnet (51) bestrombar ist und im bestromten Zustand des Elektromagneten (51) zum Antrieb einer Welle, insbesondere einer Lenkwelle (3) oder einer Querstange (4) der Lenkung (1), vorgesehen ist, wobei die Blockiervorrichtung (100) weiterhin ein Blockiermittel (6) aufweist, das reversibel von einem Freigabezustand (F), in dem die Welle (3, 4) drehbar ist, in einen Blockierzustand (B), in dem es die Welle (3, 4) unter Normallast blockiert, verstellbar ist, **dadurch gekennzeichnet, dass** der Magnetkreis des Lenkunterstützungsantriebs (5) das Blockiermittel (6) zumindest in einem der Zustände
• Freigabezustand (F) oder
• Blockierzustand (B) hält,
und/oder zumindest entweder das Verstellen des Blockiermittels (6)
• vom Freigabezustand (F) in den Blockierzustand (B) oder
• vom Blockierzustand (B) in den Freigabezustand (F) bewirkt.

2. Blockiervorrichtung (100) nach Anspruch 1, **dadurch gekennzeichnet, dass** der Lenkunterstützungsantrieb (5) als ein elektrisch kommutierender Wechselstrommotor oder ein Gleichstrommotor ausgebildet ist.

3. Blockiervorrichtung (100) nach einem der vorherigen Ansprüche, **dadurch gekennzeichnet, dass** sie einen Zusatzaktuator (9) umfasst, der aus einem Dauermagneten (92) gebildet ist.

4. Blockiervorrichtung (100) nach einem der vorherigen Ansprüche, **dadurch gekennzeichnet, dass** der Dauermagnet (92) des Zusatzaktuators (9) im Blockiermittel (6) angeordnet ist.

5. Blockiervorrichtung (100) nach einem der vorherigen Ansprüche, **dadurch gekennzeichnet, dass** der Zusatzaktuator (9) zudem einen Elektromagneten (92) umfasst.

6. Blockiervorrichtung (100) nach einem der vorherigen Ansprüche, **dadurch gekennzeichnet, dass** das Blockiermittel (6) vom Magnetkreis des Lenkunterstützungsantriebs (5) und/oder des Zusatzaktuators (9) angezogen oder abgestoßen wird.

7. Blockiervorrichtung (100) nach einem der vorherigen Ansprüche, **dadurch gekennzeichnet, dass** der Magnetkreisanteil des Magnetkreises des Lenkunterstützungsantriebs (5) und/oder des Zusatzaktuators (9), der jeweils durch den Dauermagneten gebildet ist, das Blockiermittel (6) im Freigabezustand (F) und/oder im Blockierzustand (B) hält.

8. Blockiervorrichtung (100) nach einem der vorherigen Ansprüche, **dadurch gekennzeichnet, dass** zum Verstellen des Blockiermittels (6) vom Freigabezustand (F) in den Blockierzustand (B) und/oder zurück der Elektromagnet entweder des Lenkunterstützungsantriebs (5) und/oder des Zusatzaktuators (9) bestromt wird, so dass der resultierende Magnetkreis das Blockiermittel (6) anzieht oder abstößt und dadurch verstellt.

9. Blockiervorrichtung (100) nach einem der vorherigen Ansprüche, **dadurch gekennzeichnet, dass** das Blockiermittel (6) zumindest teilweise magnetisch und/oder zumindest teilweise magnetisiert und/oder zumindest teilweise magnetisierbar ausgebildet ist.

10. Blockiervorrichtung (100) nach einem der vorherigen Ansprüche, **dadurch gekennzeichnet, dass** das Blockiermittel (6) zumindest teilweise aus einem Kunststoff gebildet ist.

11. Blockiervorrichtung (100) nach einem der vorherigen Ansprüche, **dadurch gekennzeichnet, dass** das Blockiermittel (6) gegen die Kraft eines Kraftmittels (61), insbesondere vom Freigabezustand (F) in den Blockierzustand (B), verstellt wird.

12. Blockiervorrichtung (100) nach **Anspruch 11, dadurch gekennzeichnet, dass** das Blockiermittel (6) das Kraftmittel (61) umfasst.

13. Blockiervorrichtung (100) nach einem der vorherigen Ansprüche, **dadurch gekennzeichnet, dass** das Blockiermittel (6) drehfest an der Welle (4) angeordnet ist.

14. Blockiervorrichtung (100) nach einem der vorherigen Ansprüche, **dadurch gekennzeichnet, dass** das Blockiermittel (6) im Blockierzustand (B) form- und/oder kraftschlüssig mit einem Bauteil der Blockiervorrichtung (100), insbesondere mit dem Zusatzmagneten (92) und/oder einem Gehäusebauteil (112) der Blockiervorrichtung (100), zusammenwirkt.

15. Blockiervorrichtung (100) nach einem der vorherigen Ansprüche, **dadurch gekennzeichnet, dass** das Blockiermittel (6) zum Verstellen vom Blockierzustand (B) in den Freigabezustand (F) und/oder zurück axial entlang der Welle (4) verschieblich, und/oder in axialer Richtung (41) der Welle (4) kippbar vorgesehen ist.

16. Blockiervorrichtung (100) nach **Anspruch 14, dadurch gekennzeichnet, dass** sich das Blockiermittel (6) im Blockierzustand bei Überlast relativ zum Bauteil (92, 112) dreht, und insbesondere an dem Bauteil (92, 112) entlang reibt.

## Claims

1. Blocking apparatus (100) for blocking the steering system (1) of a motor vehicle, comprising a steering assistance drive (5) which comprises a solenoid (51) and a permanent magnet (54), which solenoid and permanent magnet are provided for forming a magnetic circuit, wherein current can be applied to the solenoid (51) and, in the state in which current is applied to the solenoid (51), the solenoid is intended to drive a shaft, in particular a steering shaft (3), or a transverse rod (4) of the steering system (1), wherein the blocking apparatus (100) also has a blocking means (6) which can be reversibly adjusted from a release state (F), in which the shaft (3, 4) can be rotated, to a blocking state (B), in which it blocks the shaft (3, 4) under normal load, **characterized in that** the magnetic circuit of the steering assistance drive (5) holds the blocking means (6) at least in one of the states
• release state (F) or
• blocking state (B),
and/or at least either adjusts the blocking means (6)
• from the release state (F) to the blocking state (B) or
• from the blocking state (B) to the release state (F).

2. Blocking apparatus (100) according to Claim 1, **characterized in that** the steering assistance drive (5) is in the form of an electrically commutating AC motor or a DC motor.

3. Blocking apparatus (100) according to either of the preceding claims, **characterized in that** it comprises an auxiliary actuator (9) which is formed from a permanent magnet (92).

4. Blocking apparatus (100) according to one of the preceding claims, **characterized in that** the permanent magnet (92) of the auxiliary actuator (9) is arranged in the blocking means (6).

5. Blocking apparatus (100) according to one of the preceding claims, **characterized in that** the auxiliary actuator (9) additionally comprises a solenoid (92).

6. Blocking apparatus (100) according to one of the preceding claims, **characterized in that** the blocking means (6) is attracted or repelled by the magnetic circuit of the steering assistance drive (5) and/or of the auxiliary actuator (9).

7. Blocking apparatus (100) according to one of the preceding claims, **characterized in that** the magnetic circuit portion of the magnetic circuit of the steering assistance drive (5) and/or of the auxiliary actuator (9), which magnetic circuit portion is respectively formed by the permanent magnet, holds the blocking means (6) in the release state (F) and/or in the blocking state (B).

8. Blocking apparatus (100) according to one of the preceding claims, **characterized in that**, in order to adjust the blocking means (6) from the release state (F) to the blocking state (B) and/or back, current is applied to the solenoid either of the steering assistance drive (5) and/or of the auxiliary actuator (9), so that the resulting magnetic circuit attracts or repels, and as a result adjusts, the blocking means (6).

9. Blocking apparatus (100) according to one of the preceding claims, **characterized in that** the blocking means (6) is designed to be at least partially magnetic and/or at least partially magnetized and/or at least partially magnetizable.

10. Blocking apparatus (100) according to one of the preceding claims, **characterized in that** the blocking means (6) is formed at least partially from a plastic.

11. Blocking apparatus (100) according to one of the preceding claims, **characterized in that** the blocking means (6) is adjusted against the force of a force means (61), in particular from the release state (F) to the blocking state (B).

12. Blocking apparatus (100) according to Claim 11, **characterized in that** the blocking means (6) comprises the force means (61).

13. Blocking apparatus (100) according to one of the preceding claims, **characterized in that** the blocking means (6) is arranged on the shaft (4) such that it is fixed in terms of rotation.

14. Blocking apparatus (100) according to one of the preceding claims, **characterized in that** the blocking means (6) interacts with a component of the blocking apparatus (100), in particular with the auxiliary magnet (92) and/or with a housing component (112) of the blocking apparatus (100), in an interlocking and/or force-fitting manner in the blocking state (B).

15. Blocking apparatus (100) according to one of the preceding claims, **characterized in that** the blocking means (6) is provided such that it can slide axially along the shaft (4) and/or such that it can be tilted in the axial direction (41) of the shaft (4) in order to be adjusted from the blocking state (B) to the release state (F) and/or back.

16. Blocking apparatus (100) according to Claim 14, **characterized in that** the blocking means (6) rotates relative to the component (92, 112) in the event of overload in the blocking state, and in particular rubs along the component (92, 112).

## Revendications

1. Dispositif de blocage (100) pour bloquer la direction (1) d'un véhicule automobile, comprenant un entraînement de direction assistée (5) qui comprend un électroaimant (51) et un aimant permanent (54) qui sont prévus pour créer un circuit magnétique, l'électroaimant (51) pouvant être parcouru par un courant, et dans l'état parcouru par un courant de l'électroaimant (51), étant prévu pour l'entraînement d'un arbre, en particulier d'un arbre de direction (3) ou d'une barre transversale (4) de la direction (1), le dispositif de blocage (100) présentant en outre un moyen de blocage (6) qui peut être déplacé de manière réversible depuis un état de libération (F), dans lequel l'arbre (3, 4) peut tourner, dans un état bloqué (B) dans lequel il bloque l'arbre (3, 4) dans le cas d'une charge normale, **caractérisé en ce que** le circuit magnétique de l'entraînement de direction assistée (5) retient le moyen de blocage (6) dans
- l'état de libération (F) et/ou
- l'état de blocage (B),
et/ou provoque au moins le déplacement du moyen de blocage (6)
- de l'état de libération (F) dans l'état de blocage (B) ou
- de l'état de blocage (B) dans l'état de libération (F).

2. Dispositif de blocage (100) selon la revendication 1, **caractérisé en ce que** l'entraînement de direction assistée (5) est réalisé sous forme de moteur à courant alternatif à commutation électrique ou sous forme de moteur à courant continu.

3. Dispositif de blocage (100) selon l'une quelconque des revendications précédentes, **caractérisé en ce qu'**il comprend un actionneur supplémentaire (9) qui est formé d'un aimant permanent (92).

4. Dispositif de blocage (100) selon l'une quelconque des revendications précédentes, **caractérisé en ce que** l'élément permanent (92) de l'actionneur supplémentaire (9) est disposé dans le moyen de blocage (6).

5. Dispositif de blocage (100) selon l'une quelconque des revendications précédentes, **caractérisé en ce que** l'actionneur supplémentaire (9) comprend en outre un électroaimant (92).

6. Dispositif de blocage (100) selon l'une quelconque des revendications précédentes, **caractérisé en ce que** le moyen de blocage (6) est attiré ou repoussé par le circuit magnétique de l'entraînement de direction assistée (5) et/ou de l'actionneur supplémentaire (9).

7. Dispositif de blocage (100) selon l'une quelconque des revendications précédentes, **caractérisé en ce que** la partie du circuit magnétique de l'entraînement de direction assistée (5) et/ou de l'actionneur supplémentaire (9) qui est formée dans chaque cas par l'aimant permanent retient le moyen de blocage (6) dans l'état de libération (F) et/ou dans l'état de blocage (B).

8. Dispositif de blocage (100) selon l'une quelconque des revendications précédentes, **caractérisé en ce que** pour le déplacement du moyen de blocage (6) de l'état de libération (F) dans l'état de blocage (B) et/ou inversement, l'électroaimant de l'entraînement de direction assistée (5) et/ou de l'actionneur supplémentaire (9) est parcouru par un courant de telle sorte que le circuit magnétique résultant attire ou repousse le moyen de blocage (6) et de ce fait le déplace.

9. Dispositif de blocage (100) selon l'une quelconque des revendications précédentes, **caractérisé en ce que** le moyen de blocage (6) est réalisé de manière au moins en partie magnétique et/ou au moins en partie aimantée et/ou au moins en partie magnétisable.

10. Dispositif de blocage (100) selon l'une quelconque des revendications précédentes, **caractérisé en ce que** le moyen de blocage (6) est formé au moins en partie de plastique.

11. Dispositif de blocage (100) selon l'une quelconque des revendications précédentes, **caractérisé en ce que** le moyen de blocage (6) est déplacé à l'encontre de la force d'un moyen de force (61), en particulier de l'état de libération (F) dans l'état de blocage (B).

12. Dispositif de blocage (100) selon la revendication 11, **caractérisé en ce que** le moyen de blocage (6) comprend le moyen de force (61).

13. Dispositif de blocage (100) selon l'une quelconque des revendications précédentes, **caractérisé en ce que** le moyen de blocage (6) est disposé de manière solidaire en rotation sur l'arbre (4).

14. Dispositif de blocage (100) selon l'une quelconque des revendications précédentes, **caractérisé en ce que** le moyen de blocage (6), dans l'état de blocage (B), coopère par engagement par correspondance de forme et/ou par force avec un composant du dispositif de blocage (100), en particulier avec l'aimant supplémentaire (92) et/ou avec un composant de boîtier (112) du dispositif de blocage (100).

15. Dispositif de blocage (100) selon l'une quelconque des revendications précédentes, **caractérisé en ce que** le moyen de blocage (6) pour le déplacement de l'état de blocage (B) dans l'état de libération (F) et/ou inversement est prévu de manière déplaçable axialement le long de l'arbre (4) et/ou de manière à pouvoir basculer dans la direction axiale (41) de l'arbre (4).

16. Dispositif de blocage (100) selon la revendication 14, **caractérisé en ce que** le moyen de blocage (6), dans l'état de blocage, en cas de surcharge, tourne par rapport au composant (92, 112), et en particulier frotte le long du composant (92, 112).
